Europäisches Patentamt

**European Patent Office**

Office européen des brevets

(19)

(11) Publication number:  **0 030 791**
B1

## EUROPEAN PATENT SPECIFICATION

(45) Date of publication of patent specification: 21.03.84

(51) Int. Cl.³: **F 16 D  65/12, F 16 D  13/64**

(21) Application number: **80304057.5**

(22) Date of filing: **12.11.80**

(54) Method of making a friction disc.

(30) Priority: **03.12.79 US  99487**

(43) Date of publication of application:
**24.06.81 Bulletin 81/25**

(45) Publication of the grant of the patent:
**21.03.84 Bulletin 84/12**

(84) Designated Contracting States:
**DE FR GB IT SE**

(56) References cited:
**FR - A - 2 037 900**
**GB - A - 1 189 795**
**GB - A - 1 365 444**
**US - A - 3 250 349**
**US - A - 3 731 769**

(73) Proprietor: **GENERAL MOTORS CORPORATION**
**General Motors Building 3044 West Grand**
**Boulevard**
**Detroit Michigan 48202 (US)**

(72) Inventor: **Nels, Terry Eugene**
**2973 Southfield Drive**
**Xenia Ohio 45347 (US)**

(74) Representative: **Breakwell, John Neil Bower et al,**
**GM Patent Section Luton Office (F6) P.O. Box No.**
**3 Kimpton Road**
**Luton Beds. LU2 0SY (GB)**

Courier Press, Leamington Spa, England.

Method of making a friction disc

This invention relates to a method of making a friction disc for use in a clutch or brake assembly, in which arcuate segments of sheet-form friction material are bonded to both sides of metal core plate means, for example as disclosed in GB—A—1,189,795 (Ford Motor Company).

The present invention is concerned with the making of a friction disc by a method that is economical, conserves material and allows an annular disc of friction material to be formed as an intermediate article, such that this annular disc is capable of being stored, transported and handled in various processes and manipulations without significant distortion prior to its being bonded to the metal core plate means as an integral part of the friction disc. To this end the method according to the invention is characterized in that the method comprises: hot-moulding a plurality of parallel grooves of a predetermined depth in one side of a rectangular sheet of friction material; stamping a plurality of quarter-circle arcuate segments from said sheet of friction material, said stamping including the formation of a tab and a slot at respective ends of each segment; interlocking, through the tabs and slots, four of the segments to form an annular disc with adjacent segments having the respective grooves therein displaced 90°; and bonding one such annular disc, with the grooved surface facing axially outward, to each side of an annular metal core plate member to form a friction disc.

In the drawings:—

Figure 1 is a perspective view of a friction disc;

Figure 2 is a view of a portion of a rectangular sheet of friction material which has been grooved;

Figure 3 is a portion of Figure 2 having quarter-circle arcuate segments stamped therein;

Figure 4 is an elevational view wherein four of the segments of Figure 3 have been joined to form a disc;

Figure 5 is an elevational view of a portion of a friction disc;

Figure 6 is an enlarged view showing a portion of Figure 5; and

Figure 7 is a view taken along line 7—7 of Figure 5.

Referring to the drawings, wherein like characters represent the same or corresponding parts throughout the several views, there is shown a friction disc, generally designated 10, having a pair of annular friction linings 12 and 14 secured to both sides of a metal, specifically a steel, annular core plate 16. The friction linings 12 and 14 comprise four quarter-circle segments, each of which has a tab 18 and a slot 20 formed thereon to permit interlocking during assembly. Each of the segments making up the linings 12 and 14 has a plurality of grooves 22. From Figures 4, 5 and 6 it will be noted that the grooves 22 on adjacent segments are disposed perpendicularly.

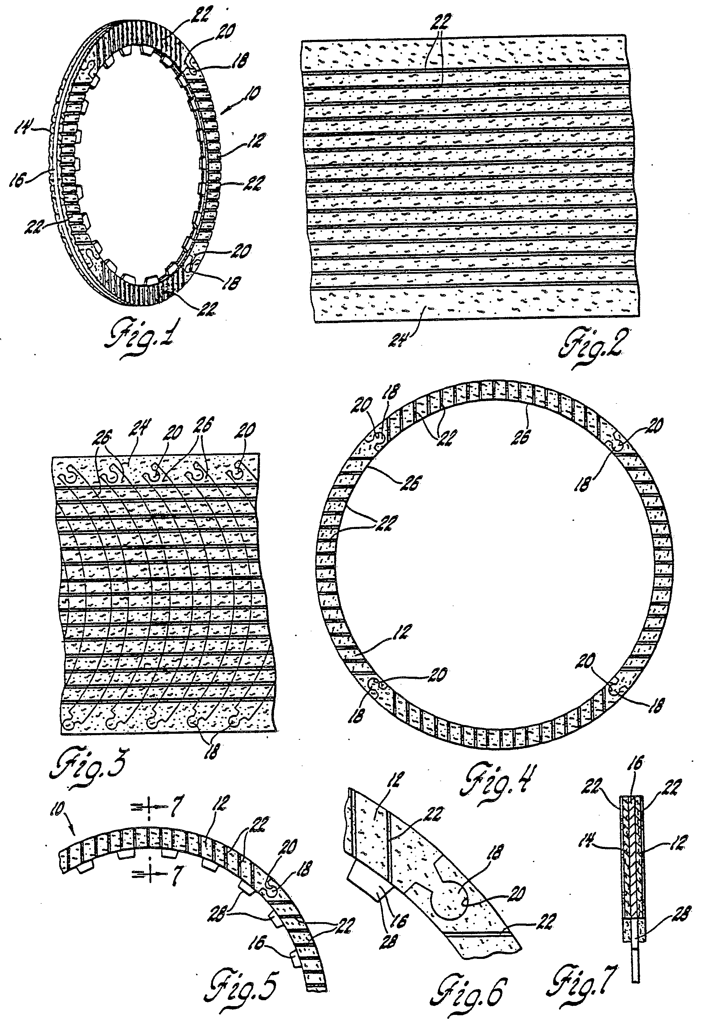

The friction linings 12 and 14 are made by a method which begins with a sheet of rectangular friction material 24 which has a plurality of parallel grooves 22 formed on one surface thereof by a hot-moulding process. Following the grooving of the rectangular sheet 24, a plurality of quarter-circle arcuate segments 26 are stamped from the friction material as shown in Figure 3. Each arcuate segment 26 has a tab 18 formed on one end and a slot 20 formed on the other end. It will be noted from Figures 2 and 3 that during the grooving process a border of ungrooved material was left along both of the longitudinal edges of the rectangular sheet 24.

As seen in Figure 3, the tabs 18 and the slots 20 are formed in this ungrooved portion of material. After the segments 26 have been stamped, they are joined to form an annular lining, such a 12, by interlocking the tab 18 on the end of one segment 26 in the slot 20 on the end of the adjacent segment. The linings 12 and 14 are then bonded to a steel annular core plate 16 which has formed thereon a plurality of spline teeth 28. As seen in Figures 1, 5, 6 and 7, the linings 12 and 14 are bonded to the steel core plate 16 with the grooved sides of the linings 12 and 14 facing axially outward from the core plate.

The bonding or adhesive material used to secure the lining 12 to the metal plate 16 can be any of the conventional bonding materials used for such purposes. The bonding material can be applied to the friction lining 12, to the steel core plate 16, or to both the lining 12 and the plate 16. If the bonding material is applied to the lining 12, this can be done prior to stamping of the segments 26, after stamping of the segments 26, or after the line 12 has been formed into a disc as shown in Figure 4. The stamping of the arcuate segments in the manner described saves a considerable amount of wasted friction material, since the entire centre of a one-piece annular lining 12 does not have to be discarded.

The pregrooving of the rectangular sheet 24 provides a simple and efficient method of grooving the friction plate, and it has been found that the perpendicularly disposed grooves on adjacent segments do not affect the efficiency or increase the drag torque of these friction discs during operation in a clutch or brake assembly.

Thus there is provided a method of making a friction disc which is economical and permits conservation of material.

**Claims**

1. A method of making a friction disc (10) for use in a clutch or brake assembly, in which arcuate segments (26) of sheet-form friction material are bonded to both sides of metal core plate means (16), characterised in that the method comprises: hot-moulding a plurality of parallel grooves (22) of a predetermined depth in one side of a rectangular sheet of friction material (24); stamping a plurality of quarter-circle arcuate segments (26) from said sheet of friction material, said stamping including the formation of a tab (18) and a slot (20) at respective ends of each segment; interlocking, through the tabs and slots, four of the segments (26) to form an annular disc (12; 14) with adjacent segments having the respective grooves therein displaced 90°; and bonding one such annular disc (12; 14), with the grooved surface facing axially outward, to each side of an annular metal core plate member (16) to form a friction disc.

2. A method according to claim 1, characterised in that the bonding is effected by applying an adhesive to both sides of the annular metal core plate member (16), and bonding two annular discs (12; 14) as aforesaid with their grooved surfaces facing axially outward to the respective sides of the annular metal core plate member to form the friction disc.

3. A method according to claim 1, characterised in that the bonding is effected by applying an adhesive to the ungrooved side of two annular discs (12; 14) as aforesaid, and bonding the discs with their grooved surfaces facing axially outward to the respective sides of the annular metal core plate member to form the friction disc.

4. A method according to claim 1, characterised in that the bonding is effected by the use of a bonding adhesive applied to the ungrooved side of the rectangular sheet (24) of friction material prior to the stamping of the arcuate segments therefrom.

## Patentansprüche

1. Verfahren zur Herstellung einer Reibscheibe (10) zur Verwendung bei einer Kupplungs- oder Bremsanordnung, bei der gekrümmte Segmente (26) eines schichtförmigen Reibmaterials auf beide Seiten eines Metall-Kernplattenmittels (16) aufgeklebt sind, gekennzeichnet durch: Heißeinformen einer Vielzahl von parallelen Nuten (22) mit vorbestimmter Tiefe in eine Seite einer rechtwinkligen Schicht aus Reibmaterial (24), Ausstanzen einer Vielzahl von viertelkreisförmigen gekrümmten Segmenten (26) aus der Schicht von Reibmaterial, wobei das Ausstanzen die Ausbildung einer Zunge (18) und eines Einschnittes (20) an jeweiligen Enden jedes Segmentes einschließt, Verhängen von vier der Segmente (26) zur Bildung einer Ringscheibe (12; 14) mittels der Zungen und Einschnitte, wobei benachbarte Segmente jeweils um 90° versetzte jeweilige Nuten besitzen, und Verbinden jeweils einer derartigen Ringscheibe (12; 14) mit axial nach außen gewendeter genuteter Fläche auf jeder Seite eines ringförmigen Metall-Kernplattenteiles (16) zur Ausbildung einer Reibscheibe.

2. Verfahren nach Anspruch 1, dadurch gekennzeichnet, daß das Verbinden durch Aufbringen eines Klebstoffes auf beide Seiten des ringförmigen Metall-Kernplattenteiles (16) und Verbinden zweier ringförmiger Scheiben (12; 14) in der genannten Weise mit axial nach außen gewendeten genuteten Flächen mit den jeweiligen Seiten des ringförmigen Metall-Kernplattenteiles zur Ausbildung der Reibscheibe bewirkt wird.

3. Verfahren nach Anspruch 1, dadurch gekennzeichnet, daß das Verbinden durch Aufbringen eines Klebstoffes auf die jeweils ungenutete Seite zweier ringförmiger Scheiben (12; 14) der genannten Art und Verbinden der Scheiben mit axial nach auswärts gerichteten genuteten Flächen mit den jeweiligen Seiten des ringförmigen Metall-Kernplattenteiles zur Ausbildung der Reibscheibe bewirkt wird.

4. Verfahren nach Anspruch 1, dadurch gekennzeichnet, daß das Verbinden durch Verwendung eines auf die ungenutete Seite der rechtwinkligen Schicht (24) von Reibmaterial vor dem Ausstanzen der gekrümmten Segmente aus dieser aufgebrachten Verbindungsklebers bewirkt wird.

## Revendications

1. Un procédé de fabrication d'un disque de friction (10) conçu pour être utilisé dans un dispositif d'embrayage ou de freinage suivant lequel des segments arqués (26) d'un matériau de friction en forme de plaque sont collés aux deux faces d'un moyen (16) formant plaque de support métallique, caractérisé en ce que le procédé consiste: à mouler à chaud une série de rainures parallèles (22) d'une profondeur prédéterminée dans une face d'une plaque rectangulaire d'un matériau de friction (24); à estamper une série de segments arqués (26) en quart de cercle dans ladite plaque d'un matériau de friction, ledit estampage comportant la formation d'une languette (18) et d'une encoche (20) aux extrémités respectives de chaque segement; à emboîter entre eux au moyen des languettes et encoches quatre des segments (26) pour former un disque annulaire (12; 14) dans lequel les segments adjacents ont leurs rainures respectives décalées de 90° les unes par rapport aux autres; et à coller un tel disque annulaire (12, 14) avec la surface rainurée orientée axialement vers l'extérieur sur chaque face d'une plaque de support annulaire (16) métallique pour former un disque de friction.

2. Un procédé selon la revendication 1, caractérisé en ce que le collage est effectué en appliquant un adhésif sur les deux faces de la plaque de support annulaire (16) et en collant deux disques annulaires (12; 14), tels que définis ci-dessus, avec leurs surfaces rainurées orientées axialement vers l'extérieur sur les faces respectives de la plaque de support métallique pour former le disque de friction.

3. Un procédé selon la revendication 1, caractérisé en ce que le collage est effectué en appliquant un adhésif sur la face non rainurée de deux disques annulaires (12; 14), tels que définis ci-dessus et en collant les disques avec leurs surfaces rainurées orientées axialement vers l'extérieur sur les faces respectives de la plaque de support annulaire métallique pour former le disque de friction.

4. Un procédé selon la revendication 1, caractérisé en ce que le collage est effectué au moyen d'un adhésif de fixation appliqué sur la face non rainurée d'une plaque rectangulaire (24) d'un matériau de friction avant l'estampage des segments arqués dans ladite plaque.

Fig.1  Fig.2

Fig.3  Fig.4

Fig.5  Fig.6  Fig.7